# EUROPEAN PATENT APPLICATION

(11) **EP 4 821 971 A1**
(43) Date of publication of application: **14.10.2026**
(21) Application number: 25827267.3
(22) Date of filing: 30.04.2025
(51) Int. Cl.: C08J 7/04, C08J 5/18, H01M 10/04

(54) **PROTECTION FILM SHEET AND ELECTRODE LAMINATE MANUFACTURING APPARATUS INCLUDING SAME**

(30) Priority: 28.06.2024 KR 20240085212
(71) Applicant: LG Energy Solution, Ltd., Seoul 07335 (KR)
(72) Inventor: CHUNG, Joo Young, Daejeon 34122 (KR); CHOI, Sunghyeon, Daejeon 34122 (KR); KIM, Seok Jin, Daejeon 34122 (KR)
(74) Representative: Goddar, Heinz J.
(86) International application number: PCT/KR2025/005876
(87) International publication number: WO 2026/005258

(57) **Abstract**

A protection film sheet according to an embodiment of the present disclosure comprises: a first layer including at least one selected from the group consisting of PI, PET, PP, PCT, and PEN and a second layer made of Si laminated on the first layer, wherein the protection film sheet has a moisture content of 0.001 ppm or more to 5000 ppm or less, or further comprises a coating layer made of a ceramic material on an outer surface of the protection film sheet.

An electrode laminate manufacturing device according to another embodiment of the present disclosure comprises the above-described protection film sheet, and manufactures an electrode laminate in which a first separator, a negative electrode, a second separator, and a positive electrode are laminated sequentially, the device comprising: a transport portion that transports an electrode laminate sheet in one direction in which a plurality of the negative electrodes are arranged spaced from each other on the first separator sheet and a plurality of the positive electrodes are arranged spaced from each other on the second separator sheet; and a first sealing section that bonds the first separator sheet and the second separator sheet to each other, wherein the protection film sheet is located between the first sealing section and the electrode laminate sheet and extends along the transport direction of the transport portion.

## Description

### [TECHNICAL FIELD]

### Cross-Reference to Related Application(s)

This application claims priority to and the benefit of Korean Patent Application no. KR10-2024-0085212, filed on June 28, 2024, with the Korean Intellectual Property Office, the disclosure of which is hereby incorporated by reference in its entirety

The present disclosure relates to a protection film sheet and an electrode laminate manufacturing device including the same, and more particularly, to a protection film sheet with high heat resistance which is not thermally deformed in a production line on which a process applying heat at a predetermined temperature or higher is performed, and an electrode laminate manufacturing device including the same.

### [BACKGROUND ART]

As mobile devices have been increasingly developed and the demand for such mobile devices has increased, the demand for secondary batteries has also sharply increased as an energy source for the mobile devices. Among the secondary batteries, lithium secondary batteries having high energy density and voltage, long cycle life, and low discharge rate are commercialized and widely used.

Based on the shape of a battery case, a secondary battery may be classified into a cylindrical battery having an electrode stack mounted in a cylindrical metal can, a prismatic battery having an electrode stack mounted in a prismatic metal can, or a pouch-type battery having an electrode stack mounted in a pouch-type battery case made of an aluminum laminate sheet. Here, the electrode stack mounted in the cylindrical battery serves as a power generating element capable of charging/discharging and including a stacked structure of a positive electrode, a negative electrode and a separator interposed between the positive electrode and the negative electrode. The electrode assembly may be classified into jelly-roll types formed by interposing a separator between a long sheet type positive electrode and a long sheet type negative electrode and winding them, and stacked types formed by sequentially stacking a plurality of positive electrodes and negative electrodes with separators being interposed between the positive electrode and the negative electrode.

Among them, the use of a pouch-shaped battery configured to have a structure in which such a stacked-type or stacked/folded-type electrode assembly is mounted in a pouch-type battery case made of an aluminum laminate sheet has gradually increased because of low manufacturing costs, light weight, easy deformation in shape, and the like.

Among the stacked-type electrode laminates, in order to manufacture a lamination & stack (L&S) type electrode laminate, which first manufactures unit cells using a positive electrode, a separator and a negative electrode and then laminates the unit cells, the unit cells must be first manufactured.

Generally, in order to manufacture a unit cell, while moving a central electrode in one direction on a conveyor belt or the like, a separator is laminated on each of the upper and lower surfaces of the central electrode, and then an upper electrode is further laminated on the uppermost stage. In some cases, a lower electrode may be further laminated on the lowermost stage. Then, a lamination process is performed in which heat and pressure are applied to the laminate obtained by laminating the electrode and the separator. As this lamination process is performed, the electrode and the separator are adhered to each other, so that the unit cell can be strongly formed.

In addition, in order to prevent folding of the separator, the lamination process must include a step of bonding a pair of separators laminated with the central electrode placed therebetween. In particular, in a conventional lamination process, sealing is performed in a state where a protection film sheet is inserted between the sealing device and the unit cell, in order to prevent deformation or damage of the electrode and/or separator that may occur at the time of sealing the separator by the conventional lamination process.

However, there are problems such as the protection film sheet being deformed by heat during the lamination process or some of the separators being transferred to the protection film, thereby making it necessary to dispose the protection film sheet after single use.

Therefore, there is a need to develop a protection film sheet that can be reused while preventing thermal deformation and separator transferring in the lamination process, and an electrode laminate manufacturing device including the same.

### [DETAILED DESCRIPTION OF THE INVENTION]

### [Technical Problem]

It is an object of the present disclosure to provide a protection film sheet with high heat resistance which is not thermally deformed in a production line on which a process applying heat at a predetermined temperature or higher is performed, and an electrode laminate manufacturing device including the same.

The objects of the present disclosure are not limited to the aforementioned objects, and other objects which are not described herein should be clearly understood by those skilled in the art from the following detailed description and the accompanying drawings.

### [Technical Solution]

According to an aspect of the present disclosure, there is provided a protection film sheet comprising: a first layer including at least one selected from the group consisting of PI (polyimide), PET (polyethylene terephthalate), PP (polypropylene), PCT (polycyclohexylenedimethylene terephthalate), and PEN (polyethylene naphthalate) and a second layer made of Si (silicon) laminated on the first layer,
wherein the protection film sheet has a moisture content of 0.001 ppm or more to 5000 ppm or less, or further comprises a coating layer made of a ceramic material on an outer surface of the protection film sheet.

The protection film sheet may not be deformed even at a temperature of 40 degrees Celsius or more to 150 degrees Celsius or less and a pressure of 0.1 MPa or more to 150 MPa or less.

The protection film sheet may have a moisture content of 0.001 ppm or more and 5000 ppm or less, and also may comprise a coating layer made of a ceramic material on an outer surface of the protection film sheet.

According to another aspect of the present disclosure, there is provided an electrode laminate manufacturing device, which comprises the protection film sheet according to claim 1, and manufactures an electrode laminate in which a first separator, a negative electrode, a second separator, and a positive electrode are laminated sequentially, the device comprising:
a laminating section that bonds an electrode laminate sheet in which a plurality of the negative electrodes are arranged spaced from each other on the first separator sheet and a plurality of the positive electrodes are arranged spaced from each other on the second separator sheet; and a first sealing section that bonds the first separator sheet and the second separator sheet to each other, wherein the protection film sheet extends along the moving direction of the electrode laminate sheet, and is located between the laminating section and the electrode laminate sheet and between the first sealing section and the electrode laminate sheet.

The electrode laminate manufacturing device comprises a first protection film reel and a second protection film reel that are spaced apart with the laminating section and the sealing section placed therebetween, wherein the protection film sheet may be unwound from the first protection film reel and then wound onto the second protection film reel, and wherein the protection film sheet wound onto the second protection film reel may be reused.

The protection film sheet wound onto the second protection film reel may be re-wound onto the first protection film reel.

The second protection film reel on which the protection film sheet is wound may be replaced mutually by the first protection film reel from which the protection film sheet is already unwound.

The second layer of the protection film sheet may face the electrode laminate sheet, and the first layer of the protection film sheet may face the first sealing section, respectively.

The electrode laminate manufacturing device further comprises a reel from which the first separator sheet, the negative electrode sheet, the second separator sheet, and the positive electrode sheet are respectively unwound, and further comprises a first cutting unit that is located in front of the laminating section based on the moving direction of the electrode laminate sheet, and cuts the negative electrode sheet and the positive electrode sheet, respectively, wherein the first cutting unit may cut the negative electrode from the negative electrode sheet and cut the positive electrode from the positive electrode sheet, and wherein the first protection film reel is located behind the first cutting unit.

In the electrode laminate sheet, a pair of the negative electrodes and the positive electrode are arranged on the same vertical line, and another pair of the negative electrodes and the positive electrode, which are located adjacent to the pair of the negative electrodes and the positive electrode, may be spaced apart from each other.

The first sealing section may bond the first sealing region of the electrode laminate sheet, the first sealing region may be a portion of the first separator sheet and a portion of the second separator sheet located between the pair of the negative electrode and the positive electrode and the other pair of the negative electrode and the positive electrode, and the protection film sheet may be located between the first sealing section and the electrode laminate sheet.

The first sealing section may comprise a first upper sealing section located on the upper part of the electrode laminate sheet and a first lower sealing section located on the lower part of the electrode laminate sheet, the first upper sealing section may comprise a first upper body part and a plurality of first upper protrusion parts spaced apart from each other along an outer circumferential surface of the first upper body part, and the plurality of first upper protrusion parts may extend along the longitudinal direction of the first upper body part.

The protection film sheet may be located between the first upper protrusion part and the first sealing region, and the first upper protrusion part may press the first sealing region.

The electrode laminate manufacturing device further comprises a second cutting unit that is located behind the first sealing section with respect to the moving direction of the electrode laminate sheet, and cuts the first sealing region to manufacture a plurality of electrode laminates, wherein the second protection film reel may be located in front of the second cutting unit.

The electrode laminate manufacturing device further comprises a second sealing section that bonds the second sealing region of the electrode laminate sheet, wherein the second sealing region may extend along the longitudinal direction of the first separator sheet and the second separator sheet, and may be a portion of the first separator sheet where the negative electrode is not arranged and a portion of the second separator sheet where the positive electrode is not arranged, and wherein the second protection film reel may be located in front of the second sealing section.

### [Advantageous Effects]

A protection film sheet according to an embodiment of the present disclosure and an electrode laminate manufacturing device including the same can have the advantages that they are not thermally deformed in a production line on which a process applying heat at a predetermined temperature or higher is performed, thereby reducing costs and improving productivity.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 is a diagram showing an electrode laminate manufacturing device according to an embodiment of the present disclosure.
FIG. 2 is a top view showing a part of the electrode laminate sheet of FIG. 1.
FIG. 3 is a cross-sectional view showing a protection film sheet included in the electrode laminate manufacturing device of FIG. 1.
FIG. 4(a) shows a conventional protection film sheet, and FIG. 4(b) is a diagram showing the surface of the protection film sheet of FIG. 3.
FIGS. 5 and 6 are diagrams showing the results of Comparative Example and Example according to Experimental Example 1.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Throughout the descriptions herein, when a certain part "includes" a component, this does not indicate that the certain part excludes other components, but indicates that the part may further include other components, unless otherwise defined.

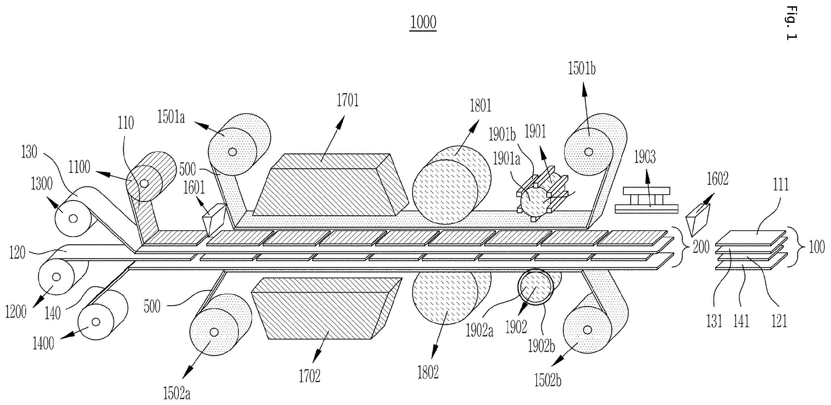

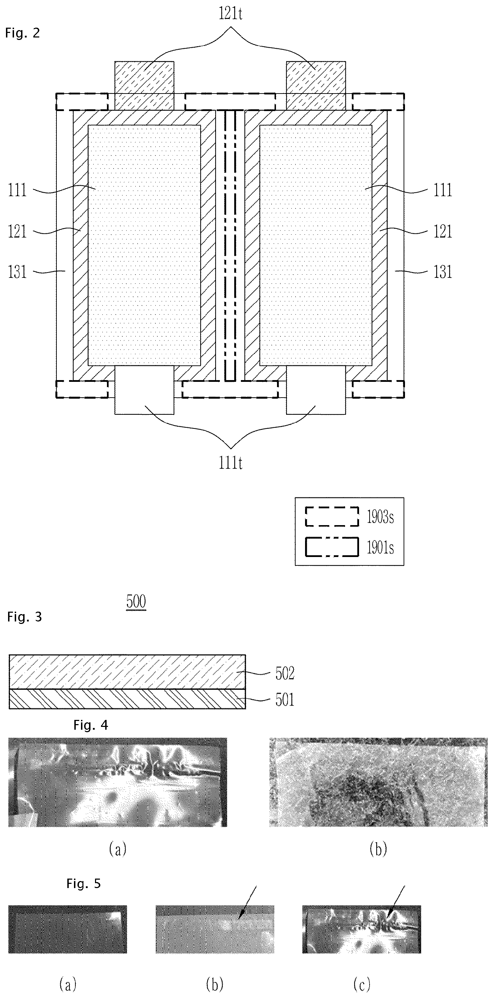

FIG. 1 1 is a diagram showing an electrode laminate manufacturing device according to an embodiment of the present disclosure. FIG. 2 is a top view showing a part of the electrode laminate sheet of FIG. 1.

Referring to FIG. 1, an electrode laminate manufacturing device 1000 according to an embodiment of the present disclosure is an electrode laminate manufacturing device 1000 that manufactures an electrode laminate 100 in which a first separator 141, a negative electrode 121, a second separator 131, and a positive electrode 111 are laminated sequentially.

The electrode laminate manufacturing device 1000 according to the present embodiment comprises laminating sections 1701, 1702, 1801, 1802 that bonds an electrode laminate sheet 200 in which a plurality of the negative electrodes 121 are arranged spaced from each other on the first separator sheet 140 and a plurality of the positive electrodes 111 are arranged spaced from each other on the second separator sheet 130; and first sealing sections 1901, 1902 that bonds a first separator sheet 140 and a second separator sheet 130 to each other.

More specifically, the electrode laminate manufacturing device 1000 may further comprise a reel from which a first separator sheet 140, a negative electrode sheet 120, a second separator sheet 130, and a positive electrode sheet 110 are respectively unwound.

As an example, the first separator sheet 140 is wound onto the first separator reel 1400, and the first separator sheet 140 can be unwound from the first separator reel 1400. The second separator sheet 130 is wound onto the second separator reel 1300, and the second separator sheet 130 may be unwound from the second separator reel 1300. The negative electrode sheet 120 is wound onto a negative electrode reel 1200, and the negative electrode sheet 120 may be unwound from the negative electrode reel 1200. The positive electrode sheet 110 is wound on a positive electrode reel 1100, and the positive electrode sheet 110 may be unwound from the positive electrode reel 1100.

The negative electrode sheet 120 may be manufactured by applying a slurry of a negative electrode active material, a conductive material, and a binder onto a negative electrode current collector, and then drying and pressing the slurry, and the positive electrode sheet 110 may be manufactured by applying a slurry of a positive electrode active material, a conductive material, and a binder onto a positive electrode current collector, and then drying and pressing the slurry. However, the manufacturing method of the negative electrode sheet 120 and the positive electrode sheet 110 is not limited thereto, and can be included in the present embodiment as long as it is a method of manufacturing the negative electrode sheet 120 and the positive electrode sheet 110 generally accepted in the art.

Referring to FIG. 1, the electrode laminate manufacturing device 1000 according to the present embodiment may further comprise a first cutting unit 1601 that is located in front of the laminating sections 1701, 1702, 1801, 1802 with respect to the moving direction of the electrode laminate sheet 200, and cuts the negative electrode sheet 120 and the positive electrode sheet 110, respectively.

More specifically, the first cutting unit 1601 may cut the negative electrode 121 from the negative electrode sheet 120 and cuts the positive electrode 111 from the positive electrode sheet 110. As an example, the first cutting unit 1601 may cut into a plurality of negative electrodes 121 spaced apart at equal intervals from the negative electrode sheet 120, and may cut into a plurality of positive electrodes 111 spaced apart at equal intervals from the positive electrode sheet 110. However, for convenience of explanation, the first cutting unit 1601 is illustrated only at a position corresponding to the positive electrode sheet 110 in FIG. 1, but the first cutting unit 1601 may also be located even at a position corresponding to the negative electrode sheet 120. As described below, the first protection film reels 1501a, 1502a from which the protection film sheet 500 is unwound may be located behind the first cutting unit 1601.

Thus, the electrode laminate manufacturing device 1000 according to the present embodiment has the advantages that since the first cutting section 1601 is not a high temperature and/or high pressure process, the protection film sheet 500 can be arranged only in a position corresponding to the configuration where the high temperature and/or high pressure process is performed, thereby being able to reduce costs and improve productivity.

The protection film sheet 500 extends along the moving direction of the electrode laminate sheet 200, and may be located between the laminating sections 1701, 1702, 1801, 1802 and the electrode laminate sheet 200 and between the first sealing sections 1901, 1902 and the electrode laminate sheet 200.

More specifically, the protection film sheet 500 may be wound or unwound onto the first protection film reels 1501a, 1502a and the second protection film reels 1501b, 1502b. As shown in FIG. 1, the first protection film reels 1501a, 1502a and the second protection film reels 1501b, 1502b may be spaced apart with the laminating sections 1701, 1702, 1801, 1802 and the first sealing sections 1901, 1902 placed therebetween. In addition, as shown in FIG. 1, the first protection film reels 1501a, 1502a and the second protection film reels 1501b, 1502b may be arranged both above and below the electrode laminate sheet 200. As an example, a first upper protection film reel 1501a and a second upper protection film reel 1501b may be arranged on the upper part of the electrode laminate sheet 200, and a first lower protection film reel 1502a and a second lower protection film reel 1502b may be arranged on the lower part of the electrode laminate sheet 200.

As an example, the protection film sheet 500 may be unwound from the first protection film reels 1501a, 1502a and then wound by the second protection film reels 1501b, 1502b. In other words, the protection film sheet 500 unwound from the first protection film reels 1501a, 1502a may extend between the laminating sections 1701, 1702, 1801, 1802 and the electrode laminate sheet 200 and between the first sealing sections 1901, 1902 and the electrode laminate sheet 200. In addition, the protection film sheet 500 may be wound onto a second protection film reels 1501b, 1502b located behind the first sealing sections 1901, 1902 with respect to the moving direction of the electrode laminate sheet 200.

More specifically, the protection film sheet 500 wound onto the second protection film reels 1501b, 1502b can be reused. As an example, the protection film sheet 500 wound onto the second protection film reels 1501b, 1502b can be re-wound onto the first protection film reel 1501a, 1502a. As another example, the second protection film reels 1501b, 1502b on which the protection film sheet 500 is wound may be replaced with the first protection film reels 1501a, 1502a on which the protection film sheet 500 is already wound.

Thus, the electrode laminate manufacturing device 1000 according to the present embodiment has advantages that the protection film sheet 500 can be reused by repeatedly moving along between the laminating sections 1701, 1702, 1801, 1802 and the first sealing sections 1901, 1902 and the electrode laminate sheet 200 through the first protection film reels 1501a, 1502a and the second protection film reels 1501b, 1502b, thereby being able to further improve productivity and cost-effectiveness.

The laminating sections 1701, 1702, 1801, 1802 may include heater sections 1701, 1702 and pressure roller sections 1801, 1802. More specifically, the heater sections 1701, 1702 may include a pair of first heater section 1701 and second heater section 1702 spaced apart with an electrode laminate sheet 200 placed therebetween. Further, the pressure roller sections 1801, 1802 may include a pair of first pressure roller section 1801 and second pressure roller section 1802 spaced apart with an electrode laminate sheet 200 placed therebetween. Here, the pressure roller sections 1801, 1802 may be arranged behind the heater sections 1701, 1702 with respect to the moving direction of the electrode laminate sheet 200.

More specifically, the electrode laminate sheet 200 may be heated by passing between a pair of first heater section 1701 and second heater section 1702, and then the heated electrode laminate sheet 200 may be pressed by a pair of first pressure roller section 1801 and second pressure roller section 1802.

As an example, the pair of first heater section 1701 and second heater section 1702 can heat the electrode laminate sheet 200 in a temperature range of 40 degrees Celsius or more to 150 degrees Celsius or less, and a pair of first pressure roller section 1801 and second pressure roller section 1802 can press the electrode laminate sheet 200 in a pressure range of 5 MPa (50 kgf/cm²) or more to 150 MPa (1500 kgf/cm²) or less.

However, the present disclosure is not limited thereto, and the heater sections 1701, 1702 may be omitted from the laminating sections 1701, 1702, 1801, 1802, and a configuration in which a heating member such as a heating wire is integrated into the pressure roller sections 1801, 1802 may also be included in the present embodiment.

Thus, in the electrode laminate manufacturing device 1000 according to the present embodiment, the electrode laminate sheet 200 is subjected to a high temperature and/or high pressure process by the laminating sections 1701, 1702, 1801, 1802, and the protection film sheet 500 having high heat resistance can prevent damage and deformation of the electrode laminate sheet 200 under high temperature and/or high pressure conditions.

Referring to FIGS. 1 and 2, in the electrode laminate sheet 200, a pair of negative electrode 121 and positive electrode 111 are arranged on the same vertical line, and another pair of negative electrode 121 and positive electrode 111 located adjacent to a pair of negative electrode 121 and positive electrode 111 may be spaced apart from each other. As an example, as shown in FIG. 2, at one end of the negative electrode 121, a negative electrode tab 121t is be protruded outward along the longitudinal direction of the negative electrode 121, and at the other end of the positive electrode 111, a positive electrode tab 111t is protruded outward along the longitudinal direction of the positive electrode 111.

The first sealing sections 1901, 1902 can bond the first sealing region 1901s of the electrode laminate sheet 200. Here, the first sealing region 1901s may be a portion of the first separator sheet 141 and a portion of the second separator sheet 131 located between a pair of negative electrode 121 and positive electrode 111 and another pair of negative electrode 121 and positive electrode 111. In other words, the first sealing region 1901s can mean a region corresponding between a pair of negative electrode 121 and positive electrode 111 and another pair of negative electrode 121 and positive electrode 111, among the regions where the first separator sheet 141 and the second separator sheet 131 face each other.

In particular, a protection film sheet 500 may be located between the first sealing sections 1901, 1902 and the electrode laminate sheet 200. More specifically, the first sealing sections 1901, 1902 may include a first upper sealing section 1901 located on the upper part of the electrode laminate sheet 200, and a first lower sealing section 1902 located on the lower part of the electrode laminate sheet 200.

As an example, the first upper sealing section 1901 may include a first upper body part 1901a and a plurality of first upper protrusion parts 1901b spaced apart from each other along an outer circumferential surface of the first upper body part 1901a. Here, the plurality of first upper protrusion parts 1901b may extend along the longitudinal direction of the first upper body part 1901a. At this time, the first upper protrusion parts 1901b may press the first sealing region 1901s. In addition, in the first upper sealing section 1901, the first upper body part 1901a rotates at a speed corresponding to the moving speed of the electrode laminate sheet 200, taking into account the spacing between the plurality of first upper protrusion parts 1901b, so that the plurality of first upper protrusion parts 1901b can sequentially press the first sealing region 1901s.

The first lower sealing section 1902 may include a first lower body part 1902a and a first lower cover part 1902b extending along an outer circumferential surface of the first lower body part 1902a. Here, the first lower cover part 1902b may conduct pressing for sealing the separator together with the first upper sealing section 1901 while preventing wear of the first upper protrusion part 1901b.

As an example, the first sealing sections 1901, 1902 may bond between the first separator sheet 140 and the second separator sheet 130 at a temperature of 40 degrees Celsius or more to 140 degrees Celsius or less and/or a pressure of 0.1 MPa (1 kgf/cm²) or more to 0.8 MPa (8 kgf/cm²) or less with respect to the electrode laminate sheet 200.

Here, the protection film sheet 500 may be located between the first sealing sections 1901, 1902 and the first sealing region 1901s. As an example, the protection film sheet 500 may be located between the first upper protrusion part 1901b and the first sealing region 1901s.

However, the shape of the first sealing sections 1901, 1902 is not limited to the configuration shown in FIG. 1, and can be included in the present embodiment as long as they have a shape capable of properly bonding the first sealing region 1901s.

Thus, in the electrode laminate manufacturing device 1000 according to the present embodiment, the electrode laminate sheet 200 is subjected to a high temperature and/or high pressure process by the first sealing sections 1901, 1902, and the protection film sheet 500 having high heat resistance can prevent damage and deformation of the electrode laminate sheet 200 under high temperature and/or high pressure conditions.

Referring to FIG. 1, the electrode laminate manufacturing device 1000 according to the present embodiment may further include a second cutting unit 1602 located behind the first sealing sections 1901, 1902 with respect to the moving direction of the electrode laminate sheet 200. Here, the second cutting unit 1602 can cut the first sealing region 1901s to manufacture a plurality of electrode laminates 100 from the electrode laminate sheet 200. As an example, the second cutting unit 1602 can cut the central portion of the first sealing region 1901s. However, for convenience of explanation, the second cutting unit 1602 is illustrated only at a position corresponding to the positive electrode sheet 110 in FIG. 1, but the present embodiment may also include a case where the second cutting unit 1602 is located even at a position corresponding to the negative electrode sheet 120.

Thus, the electrode laminate manufacturing device 1000 according to the present embodiment can facilitate cutting of the second cutting unit 1602 for the first sealing region 1901s since the second cutting unit 1602 is located behind the first sealing sections 1901, 1902.

At this time, the second protection film reels 1501b, 1502b may be located in front of the second cutting unit 1602. In other words, a separate protection film sheet 500 may not be extended between the second cutting unit 1602 and the electrode laminate sheet 200.

Thus, since the second cutting unit 1602 is not a high temperature and/or high pressure process, the protection film sheet 500 may not be formed at a position corresponding to the second cutting unit 1602, which has the advantage of being able to reduce costs and improve productivity.

However, in the case of the electrode laminate manufacturing device according to another embodiment of the present disclosure, the second protection film reels 1501, 502b may be arranged in front of the first sealing sections 1901, 1902, unlike the electrode laminate manufacturing device 1000 described above. More specifically, since the laminating sections 1701, 1702, 1801, 1802 may abut against the negative electrode 121 and the positive electrode 111 included in the electrode laminate sheet 200, respectively, it may be essential to arrange a protection film sheet 500 between the laminating sections 1701, 1702, 1801, 1802 and the electrode laminate sheet 200. In contrast, since the first sealing sections 1901, 1902 abut against the first separator sheet 141 and the second separator sheet 131, the protection film sheet 500 being arranged between the first sealing sections 1901, 1902 and the electrode laminate sheet 200 may be omitted.

However, in the case of the electrode laminated body manufacturing device 1000 described above, as the protection film sheet 500 is arranged for both the first sealing sections 1901, 1902 and the laminating sections 1701, 1702, 1801, 1802, there is an advantage that process convenience and productivity can be further improved.

The second sealing section 1903 may bond the second sealing region 1903s of the electrode laminate sheet 200. Here, the second sealing region 1903s extends along the longitudinal direction of the first separator sheet 141 and the second separator sheet 131, and may be a portion of the first separator sheet 141 where the negative electrode 121 is not arranged and a portion of the second separator sheet 131 where the positive electrode 111 is not arranged. As shown in FIG. 1, the second protection film reels 1501b, 1502b may be located in front of the second sealing section 1903.

FIG. 3 is a cross-sectional view showing a protection film sheet included in the electrode laminate manufacturing device of FIG. 1. FIG. 4(a) shows a conventional protection film sheet, and FIG. 4(b) is a diagram showing the surface of the protection film sheet of FIG. 3.

Referring to FIGS. 3 and 4, a protection film sheet 500 according to an embodiment of the present disclosure is a protection film sheet 500 comprising a first layer 501 including at least one selected from the group consisting of PI (polyimide), PET (polyethylene terephthalate), PP (polypropylene), PCT (polycyclohexylenedimethylene terephthalate), and PEN (polyethylene naphthalate) and a second layer made of Si (silicon) laminated on the first layer. In other words, the protection film sheet 500 according to the present embodiment may include a first layer 501 including at least one selected from the group consisting of PI (polyimide), PET (polyethylene terephthalate), PP (polypropylene), PCT (polycyclohexylenedimethylene terephthalate), and PEN (polyethylene naphthalate) and a second layer 502 formed by coating Si (silicon) onto the first layer. More preferably, the first layer 501 may be made of PI (polyimide), and the second layer 502 may be made of Si (silicon).

Referring to FIGS. 1 and 3, the second layer 502 of the protection film sheet 500 may face the electrode laminate sheet 200, and the first layer 501 of the protection film sheet 500 may face the laminating sections 1701, 1702, 1801, 1802 and the first sealing sections 1901, 1902, respectively.

The protection film sheet 500 according to the present embodiment may not be deformed at a temperature of 40 degrees Celsius or more to 150 degrees Celsius or less and a pressure of 0.1 MPa or more to 150 MPa or less.

More specifically, as shown in FIG. 4(b), the moisture content of the protection film sheet 500 may be 0.001 ppm or more and 5000 ppm or less. Here, the protection film sheet 500 may undergo a moisture removal process that is performed at a temperature of 100 degrees Celsius or more. As an example, the moisture removal process may be performed by radiant heat using an IR/MICA heater. As another example, the moisture removal process may be performed by convection heat using hot air. However, the moisture removal process is not limited thereto, and may be included in the present embodiment as long as it is a process that causes the protection film sheet 500 to have a moisture content within the above-described range.

Thus, the protection film sheet 500 according to the present embodiment has a moisture content within the above-described range, and thus has the advantage that the protection film sheet 500 has high heat resistance and can be reused in high temperature and/or high pressure processes.

Unlike the same, it can be confirmed that the conventional protection film sheet is deformed at a temperature of 140 degrees Celsius or more and a pressure of 0.2 MPa or more, as shown in FIG. 4(a).

In addition, the protection film sheet 500 further includes a coating layer (not shown) formed on the outer surface of the protection film sheet 500, wherein the coating layer may be made of a ceramic material. As an example, the ceramic material may be alumina ceramic (Al₂O₃). However, the ceramic material is not limited thereto, and may be included in the present embodiment as long as it is a ceramic material that can be coated onto the outer surface of the protection film sheet 500.

Thus, the protection film sheet 500 according to the present embodiment has advantages that since a coating layer is further formed on the outer surface of the protection film sheet 500, the protection film sheet 500 can be more effectively prevented from being deformed during the process performed by the laminating sections 1701, 1702, 1801, 1802 and the first sealing sections 1901, 1902, and the protection film sheet 500 can be reused in a high temperature and/or high pressure process.

A battery cell according to another embodiment of the present disclosure may include an electrode laminate manufactured by the electrode laminate manufacturing device described above. The battery cell may also be included in a battery module in a form in which a plurality of battery cells are laminated, and one or more battery modules may be packaged in a pack case to form a battery pack. In addition, the battery cell may be directly packaged in a pack case in a form in which a plurality of battery cells are laminated to form a battery pack, and some of the components of the battery module unit may be omitted.

The battery pack described above may be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, which is also falls under the scope of the present disclosure.

Hereinafter, the present disclosure will be described in more detail with reference to Examples. However, the following Examples are for illustrative purposes only, and the scope of the present disclosure is not intended to be limited by the Examples.

### <Manufacturing Example>

A protection film sheet containing a first layer made of PI (polyimide) having a thickness of 12 um and a second layer formed by coating Si (silicon) onto the first layer to a thickness of 0.01 um or more to 10 um or less was manufactured. Here, PI has a glass transition temperature (T_{g}) of 250 degrees Celsius and a transparency of 90%.

### <Example>

Two separators were arranged between a pair of protection film sheets manufactured according to Manufacturing Example, and the second layer of each protection film sheet was arranged to abut on the separator. Here, the separator is PE (polyethylene) having a thickness of 15 um.

As described above, a pair of sealing members was pressed at a pressure of 0.2 MPa and heated to 140 degrees Celsius for the upper and lower parts of the laminate in which the two separators were arranged between a pair of protection film sheets. Here, the pair of sealing members were configured such that a sealing tool and a cartridge heater were integrated, and the pair of sealing members were arranged so that the sealing tool and the upper and lower parts of the laminate were abutted on each other.

### <Comparative Example>

A laminate was manufactured in the same manner as in Example, except that in the protection film sheet manufactured according to Manufacturing Example, the first layer is PET (polyethylene terephthalate) having a thickness of 12 um. Here, PET has a glass transition temperature (T_{g}) of 80 degrees Celsius and a transparency of 90%.

### <Experimental Example 1 - Confirmation of Appearance of the Protection Film Sheet> Deformation/ Transferability

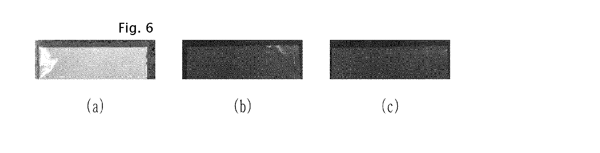

In the laminates manufactured in Examples and Comparative Examples, the outer surface of the protection film sheet was photographed with magnification, and the results are shown in FIGS. 5 and 6. FIGS. 5 and 6 are diagrams showing the results of Comparative Example and Example according to Experimental Example 1. In FIGS. 5 and 6, (a) is a diagram showing the case where the number of times of sealing is 0, (b) is a diagram showing the case where the number of times of sealing is 1, and (c) is a diagram showing the case where the number of times of sealing is 50.

Referring to FIG. 5, the protection film sheet of Comparative Example shows that the degree of deformation increases as the number of times of sealing gradually increases, and that a part of the separator is transferred.

Unlike the same, referring to FIG. 6, the protection film sheet of Example shows that deformation hardly occurs even when the number of times of sealing gradually increases, and that the separator is also not transferred.

Thus, it can be confirmed that since the protection film sheet of Example has a first layer made of a material having a relatively high glass transition temperature, it is not thermally deformed under high temperature and high pressure conditions unlike Comparative Example. That is, in the case of having high heat resistance like the protection film sheet of Example, it can be confirmed that thermal deformation under high temperature and high pressure conditions can be effectively prevented.

### <Experimental Example 2_Confirming whether the separator is sealed>

In order to confirm whether or not the two separators are sealed in the laminates manufactured in Example and Comparative Example, the thicknesses of the two separators were measured.

At this time, it was confirmed that the thickness of the two separators in Comparative Example was 19 um, and the thickness of the two separators in Example was 12.5 um.

Thus, it can be confirmed that the protection film sheet of Example was formed so that the two separators were sealed more effectively than Comparative Example. That is, it can be confirmed that the protection film sheet of Example has high heat resistance and effective sealing performance, unlike Comparative Example.

Although preferred embodiments of the present disclosure have been shown and described above, the scope of the present disclosure is not limited thereto, and numerous other variations and modifications can be made by those skilled in the art using the basic principles of the invention defined in the appended claims, which also falls within the spirit and scope of the invention.

## Claims

1. A protection film sheet comprising: a first layer including at least one selected from the group consisting of PI (polyimide), PET (polyethylene terephthalate), PP (polypropylene), PCT (polycyclohexylenedimethylene terephthalate), and PEN (polyethylene naphthalate) and a second layer made of Si (silicon) laminated on the first layer,
wherein the protection film sheet has a moisture content of 0.001 ppm or more to 5000 ppm or less, or further comprises a coating layer made of a ceramic material on an outer surface of the protection film sheet.

2. The protection film sheet according to claim 1,
wherein the protection film sheet is not deformed even at a temperature of 40 degrees Celsius or more to 150 degrees Celsius or less and a pressure of 0.1 MPa or more to 150 MPa or less.

3. The protection film sheet according to claim 2,
wherein the protection film sheet has a moisture content of 0.001 ppm or more and 5000 ppm or less, and also comprises a coating layer made of a ceramic material on an outer surface of the protection film sheet.

4. An electrode laminate manufacturing device, which comprises the protection film sheet according to claim 1, and manufactures an electrode laminate in which a first separator, a negative electrode, a second separator, and a positive electrode are laminated sequentially, the device comprising:
a laminating section that bonds an electrode laminate sheet in which a plurality of the negative electrodes are arranged spaced from each other on the first separator sheet and a plurality of the positive electrodes are arranged spaced from each other on the second separator sheet; and
a first sealing section that bonds the first separator sheet and the second separator sheet to each other,
wherein the protection film sheet extends along the moving direction of the electrode laminate sheet, and is located between the laminating section and the electrode laminate sheet and between the first sealing section and the electrode laminate sheet.

5. The electrode laminate manufacturing device according to claim 4,
comprising a first protection film reel and a second protection film reel that are spaced apart with the laminating section and the sealing section placed therebetween,
wherein the protection film sheet is unwound from the first protection film reel and then wound onto the second protection film reel, and
wherein the protection film sheet wound onto the second protection film reel is reused.

6. The electrode laminate manufacturing device according to claim 5,
wherein the protection film sheet wound onto the second protection film reel is re-wound onto the first protection film reel.

7. The electrode laminate manufacturing device according to claim 5,
wherein the second protection film reel on which the protection film sheet is wound is replaced mutually by the first protection film reel from which the protection film sheet is already unwound.

8. The electrode laminate manufacturing device according to claim 4, wherein:
wherein the second layer of the protection film sheet faces the electrode laminate sheet, and
the first layer of the protection film sheet faces the first sealing section, respectively.

9. The electrode laminate manufacturing device according to claim 4,
further comprising a reel from which the first separator sheet, the negative electrode sheet, the second separator sheet, and the positive electrode sheet are respectively unwound, and
further comprising a first cutting unit that is located in front of the laminating section based on the moving direction of the electrode laminate sheet, and cuts the negative electrode sheet and the positive electrode sheet, respectively,
wherein the first cutting unit cuts the negative electrode from the negative electrode sheet and cuts the positive electrode from the positive electrode sheet, and
wherein the first protection film reel is located behind the first cutting unit.

10. The electrode laminate manufacturing device according to claim 4,
wherein in the electrode laminate sheet,
a pair of the negative electrodes and the positive electrode are arranged on the same vertical line, and
another pair of the negative electrodes and the positive electrode, which are located adjacent to the pair of the negative electrodes and the positive electrode, are spaced apart from each other.

11. The electrode laminate manufacturing device according to claim 10,
wherein the first sealing section bonds the first sealing region of the electrode laminate sheet,
the first sealing region is a portion of the first separator sheet and a portion of the second separator sheet located between the pair of the negative electrode and the positive electrode and the other pair of the negative electrode and the positive electrode, and
the protection film sheet is located between the first sealing section and the electrode laminate sheet.

12. The electrode laminate manufacturing device according to claim 11,
wherein the first sealing section comprises a first upper sealing section located on the upper part of the electrode laminate sheet and a first lower sealing section located on the lower part of the electrode laminate sheet,
the first upper sealing section comprises a first upper body part and a plurality of first upper protrusion parts spaced apart from each other along an outer circumferential surface of the first upper body part, and
the plurality of first upper protrusion parts extend along the longitudinal direction of the first upper body part.

13. The electrode laminate manufacturing device according to claim 12,
wherein the protection film sheet is located between the first upper protrusion part and the first sealing region, and
the first upper protrusion part presses the first sealing region.

14. The electrode laminate manufacturing device according to claim 11,
further comprising a second cutting unit that is located behind the first sealing section with respect to the moving direction of the electrode laminate sheet, and cuts the first sealing region to manufacture a plurality of electrode laminates,
wherein the second protection film reel is located in front of the second cutting unit.

15. The electrode laminate manufacturing device according to claim 10,
further comprising a second sealing section that bonds the second sealing region of the electrode laminate sheet,
wherein the second sealing region extends along the longitudinal direction of the first separator sheet and the second separator sheet, and is a portion of the first separator sheet where the negative electrode is not arranged and a portion of the second separator sheet where the positive electrode is not arranged, and
wherein the second protection film reel is located in front of the second sealing section.
